# EUROPÄISCHE PATENTSCHRIFT

(11) **EP 3 837 823 B1**
(45) Veröffentlichungstag und Bekanntmachung des Hinweises auf die Patenterteilung: **07.06.2023**
(21) Anmeldenummer: 19782474.1
(22) Anmeldetag: 16.08.2019
(51) Int. Cl.: H04L 9/40, H04L 67/12, H04L 67/62

(54) **GEGEN ANGRIFFE GESICHERTE NETZWERKSCHNITTSTELLE**
NETWORK INTERFACE PROTECTED AGAINST ATTACKS
INTERFACE RÉSEAU SÉCURISÉE CONTRE LES ATTAQUES

(30) Priorität: 17.08.2018 DE 102018213902
(43) Veröffentlichungstag der Anmeldung: 23.06.2021
(73) Patentinhaber: Continental Automotive Technologies GmbH, 30165 Hannover (DE)
(72) Erfinder: ZINNER, Helge, 665824 Schwalbach a. Ts. (DE)
(74) Vertreter: Continental Corporation
(86) Internationale Anmeldenummer: PCT/EP2019/071989
(87) Internationale Veröffentlichungsnummer: WO 2020/035584

(56) Entgegenhaltungen:
- WO-A1-2009/121087
- US-A1- 2004 028 047
- US-A1- 2017 134 937

## Beschreibung

Die Erfindung betrifft eine Netzwerkschnittstelle, die gegen das unbefugte Einschleusen von Nachrichten besonders gesichert und daher insbesondere für Ethernet-Netzwerke in Fahrzeugen geeignet ist.

Die Patentdokumente US 2017/134937 A1 und US 2005/220017 A1 sind relevanter Stand der Technik.

Für die Verbindung von Steuergeräten, Sensoren und Aktoren in einem Fahrzeug untereinander werden an Stelle von individuellen Punkt-zu-Punkt-Verbindungen seit langem Netzwerke eingesetzt, um Kosten und Gewicht für die Verkabelung einzusparen. Hierfür kommen meistens Bussysteme, wie CAN, MOST und FlexRay, zum Einsatz. Es ist weiterhin gewünscht, künftig Ethernet zu verwenden, das sich außerhalb von Fahrzeugen als gebräuchlichster Standard für Netzwerke durchgesetzt hat.

Ein großer Vorteil derartiger Netzwerke ist, dass prinzipiell jedes Gerät von jedem Ort im Netzwerk aus erreichbar ist. Die Kehrseite ist, dass sich auch Störungen in dem Netzwerk fortpflanzen und eine scheinbar harmlose Fehlfunktion beispielsweise durch eine bloße Überlastung des Netzwerks zu einem kritischen Problem anwachsen kann, weil für die Fahrzeugsicherheit kritische Nachrichten nicht mehr pünktlich transportiert werden können. Die EP 3 166 255 A1 offenbart daher ein Verfahren für die Verarbeitung von zeitkritischem Datenverkehr in einem Netzwerk, bei dem Datenpakete, die außerhalb eines vorab zugeteilten Zeitraums eingehen, ohne Ansehung ihres Inhalts verworfen werden. So wird gewährleistet, dass zum falschen Zeitpunkt eintreffende Daten die Übermittlung anderer wichtiger Daten nicht behindern.

Die Erfindung stellt eine Netzwerkschnittstelle bereit. Diese Netzwerkschnittstelle weist einen Eingangsanschluss auf, der dazu ausgebildet ist, Nachrichten von einem ersten Gerät oder ersten Netzwerk entgegenzunehmen. Die Netzwerkschnittstelle weist weiterhin einen Ausgangsanschluss auf, der dazu ausgebildet ist, Nachrichten an ein zweites Gerät oder zweites Netzwerk weiterzuleiten. Die Netzwerkschnittstelle kann also beispielsweise in einem Steuergerät, Sensor oder Aktor verbaut sein, um diese Komponenten mit einem Fahrzeugnetzwerk zu verbinden. Die Netzwerkschnittstelle kann aber auch beispielsweise in einem Gerät der Netzwerkinfrastruktur, wie etwa einem Switch oder Router, verbaut sein.

Die Netzwerkschnittstelle weist weiterhin einen Speicher für einen Zeitplan auf und ist dazu ausgebildet, während durch den Zeitplan definierter Öffnungszeiten am Eingangsanschluss eingehende Nachrichten an den Ausgangsanschluss weiterzuleiten und während durch den Zeitplan definierter Schließzeiten am Eingangsanschluss eingehende Nachrichten zu verwerfen.

Zusätzlich ist eine Konfigurationseinheit vorgesehen, die dazu ausgebildet ist, einen von einer Kontrolleinheit als gemeinsames Geheimnis für die Netzwerkschnittstelle und mindestens einen Absender von Nachrichten festgelegten Zeitplan entgegenzunehmen und in dem Speicher abzulegen, und/oder einen Zeitplan mit mindestens einem Absender von Nachrichten als gemeinsames Geheimnis auszuhandeln.

Dabei bedeutet der Begriff "gemeinsames Geheimnis" insbesondere, dass der Zeitplan im Netzwerk nicht allgemein bekannt ist und dass die Zeitanteile der Öffnungs- und Schließzeiten so gewählt sind, dass ein Herausfinden des Zeitplans oder einer darin enthaltenen Öffnungszeit durch bloßes Probieren hinreichend unwahrscheinlich ist. Wäre beispielsweise jede ungerade Sekunde (oder Millisekunde) Öffnungszeit und jede gerade Sekunde (oder Millisekunde) Schließzeit, dann würde ein zu einem zufälligen Zeitpunkt an die Netzwerkschnittstelle gesendetes Datenpaket mit einer Wahrscheinlichkeit von 50 % akzeptiert. Bei nur einer Millisekunde Öffnungszeit innerhalb jeder Sekunde sinkt diese Wahrscheinlichkeit schon auf 0,1 %.

Es wurde erkannt, dass auf diese Weise die Netzwerkschnittstelle mit geringem Aufwand gegen das Einschleusen unbefugt versendeter Nachrichten gesichert werden kann. Für solche unbefugten Nachrichten sind in einem Fahrzeug mehrere Quellen denkbar. So kann beispielsweise ein zusätzliches Gerät an das Netzwerk angeschlossen werden, wie etwa durch physischen Eingriff in eine Kabelverbindung, durch Nutzung eines noch freien Anschlusses an einem Verteiler (etwa einer Bridge), durch Nutzung eines Diagnosezugangs oder durch Austausch eines gerade nicht benötigten Geräts gegen ein unbefugtes Gerät. Auch kann beispielsweise ein an sich autorisiertes Gerät im Netzwerk mit einer Malware befallen sein, die es dazu veranlasst, auch zu anderen als den eigentlich vorgesehenen Zeiten zusätzliche Nachrichten zu senden.

Weiterhin besteht immer dann, wenn es mehrere Sicherheitsdomänen gibt und diese nicht physikalisch voneinander entkoppelt sind, prinzipiell ein Risiko, dass Nachrichten aus einer weniger vertrauenswürdigen Sicherheitsdomäne (etwa einer Domäne, der ein vernetztes Infotainment-System angehört) in eine vertrauenswürdige und für den Betrieb des Fahrzeugs wichtige Sicherheitsdomäne (etwa eine Domäne, der ein Steuergerät für das autonome Fahren angehört) eingeschmuggelt werden. Angriffspunkte in dieser Hinsicht sind beispielsweise Netzwerkkomponenten oder Geräte, die an beide Sicherheitsdomänen gleichzeitig angeschlossen sind.

In all diesen Fällen kennt der Angreifer nicht den Zeitplan der Öffnungszeiten. Daher nützt es ihm nichts, die Nachrichten irgendwie in das Netzwerk einzuschleusen, denn sie werden von der Netzwerkschnittstelle verworfen. Dieses Verwerfen kann insbesondere allein auf Grund der falschen Sendezeit ohne Ansehen des Inhalts erfolgen, was unter Sicherheitsaspekten besonders vorteilhaft ist: Wenn auf Grund der falschen Sendezeit bereits damit zu rechnen ist, dass der Inhalt der Nachricht böswillig ist, dann birgt jede Verarbeitung dieses Inhalts das Risiko, dass in diesem Inhalt enthaltene Malware der verarbeitenden Logik durch Pufferüberläufe, bewusst ungültig formulierte Nachrichten und ähnliche Angriffstechniken ihren Willen aufzwingt. Erfolgt keine derartige Verarbeitung, laufen die Angriffe ins Leere.

Ein Verwerfen der Nachrichten ohne inhaltliche Verarbeitung ist weiterhin schnell und in Hardware durchführbar, ohne dass hierdurch begrenzte Ressourcen (wie etwa eine maximal mögliche Anzahl gleichzeitig in Bearbeitung befindlicher Nachrichten) im Sinne eines "Denial of Service"-Angriffs ausgeschöpft werden können.

Weiterhin lässt sich auch der unbefugte Komplettaustausch eines Netzwerkteilnehmers gegen ein anderes Gerät erkennen, und Nachrichten von diesem anderen Gerät können blockiert werden. So werden beispielsweise bislang in Motorsteuergeräten implementierte Wegfahrsperren umgangen, indem das ganze Steuergerät gegen ein manipuliertes Steuergerät ausgetauscht wird, das ein Starten des Fahrzeugs auch ohne den Originalschlüssel zulässt. Wenn nun aber beispielsweise bei der Zusammenstellung der Geräte für ein konkretes Fahrzeug mit einer Kontrolleinheit einen Zeitplan als Geheimnis festgelegt, welches das Motorsteuergerät und die von ihm anzusprechenden Geräte und Aktoren kennen, dann fehlt dieses Geheimnis in einem unbefugt eingesetzten Motorsteuergerät. In der Folge werden Nachrichten, die das falsche Motorsteuergerät zum falschen Zeitpunkt sendet, verworfen, so dass etwa der Anlasser den Befehl zu seiner Aktivierung ignoriert.

Prinzipiell ließe sich die gleiche oder eine höhere Sicherheit auch allein durch kryptographische Absicherung der Kommunikation erreichen. Dies erfordert jedoch eine deutlich höhere Rechenleistung, die in Steuergeräten für Fahrzeuge und anderen Embedded-Systemen nicht immer vorhanden ist. Weiterhin muss jede Nachricht erst einmal kryptographisch verarbeitet und geprüft werden, was neue Angriffspunkte schafft. Der Angreifer erhält zumindest die Gelegenheit, der mit hohen Privilegien arbeitenden kryptographischen Software Nachrichten vorzulegen. Er könnte beispielsweise versuchen, durch bewusst nicht spezifikationskonform formatierte Nachrichten die kryptographische Software zum Absturz zu bringen oder ihr gar seinen Willen aufzuzwingen.

Schließzeiten stehen für die Annahme von Nachrichten nicht zur Verfügung, was die über die alle Öffnungszeiten und alle Schließzeiten umfassende Gesamtzeit gemittelte verfügbare Bandbreite entsprechend vermindert. Die Aufteilung der Gesamtzeit in Öffnungszeiten und Schließzeiten richtet sich somit einerseits nach der gewünschten Bandbreite und Latenzzeit und andererseits danach, wie lang die zu übertragenden Nachrichten sind. So sind beispielsweise in einem Ethernet-Netzwerk größere Datenpakete zu übertragen, wenn eine Übertragung großvolumiger Daten, wie Videodaten oder Software-Updates, ansteht.

Daher sind in einer vorteilhaften Ausgestaltung die einzelnen Öffnungszeiten in dem Zeitplan höchstens 150 µs lang und durch Schließzeiten von mindestens 1 ms Dauer voneinander getrennt. Dies stellt einen für viele Fahrzeuganwendungen gangbaren Kompromiss zwischen Sicherheitsniveau, Bandbreite und Latenzzeit dar.

In einer besonders vorteilhaften Ausgestaltung umfasst die Netzwerkschnittstelle mindestens ein elektrisches oder optisches Schaltelement, das einen elektrischen oder optischen Laufweg von am Eingangsanschluss vorgelegten Signalen zu den Öffnungszeiten physikalisch durchlässig schaltet und zu den Schließzeiten physikalisch undurchlässig schaltet. Als elektrisches Schaltelement kann beispielsweise ein Transistor dienen, der etwa den elektrischen Laufweg oder eine Lichtquelle für den optischen Laufweg aktivieren und deaktivieren kann. Als optisches Schaltelement kann beispielsweise ein in den optischen Laufweg einführbarer MEMS-Spiegel dienen. Die physikalische Unterbrechung des elektrischen oder optischen Laufweges zu den Schließzeiten kann durch keinen böswilligen Inhalt, der in der Nachricht möglicherweise enthalten ist, unbefugt aufgehoben werden.

Dies gilt insbesondere in einer weiteren besonders vorteilhaften Ausgestaltung, in der mindestens ein elektrisches oder optisches Schaltelement zwischen den Eingangsanschluss und einen Demodulator, der Nachrichten aus den Signalen dekodiert, geschaltet ist. Eine Unterbrechung durch das Schaltelement hat dann unmittelbar zur Folge, dass jede Dekodierung der möglicherweise böswilligen Nachricht unterbleibt und dieser böswillige Inhalt unzugänglich bleibt.

In einer weiteren besonders vorteilhaften Ausgestaltung ist die Konfigurationseinheit dazu ausgebildet, den Zeitplan mit einem kryptographischen Public-Key-Protokoll auszuhandeln. Beispielsweise kann zwischen der Konfigurationseinheit und einem Absender, von dem Nachrichten empfangen werden sollen, ein Diffie-Hellman-Schlüsselaustausch durchgeführt werden, der in die Erzeugung des Zeitplans als gemeinsames Geheimnis mündet. Die Geräte authentifizieren sich dann gegenseitig über den Beweis, dass sie jeweils den privaten Schlüssel zu einem vom Partner als vertrauenswürdig eingestuften öffentlichen Schlüssel besitzen.

Auf diese Weise lässt sich insbesondere das gegenseitige Vertrauen zwischen Geräten dezentral organisieren. So können beispielsweise zwei zusammengehörende Geräte werksseitig in einem Zustand ausgeliefert werden, in dem ihre öffentlichen Schlüssel wechselseitig als vertrauenswürdig anerkannt werden. Sie können dann direkt nach dem Anschluss an das Netzwerk ohne weitere manuelle Konfiguration einen Zeitplan aushandeln, unabhängig davon, welche weiteren Geräte in dem Netzwerk vorhanden sind. Auch kann beispielsweise ein neues Gerät selektiv zur Kommunikation nur mit bestimmten anderen Geräten ermächtigt werden.

Es ist ein Detektor vorgesehen, der dazu ausgebildet ist, Versuche, während der Schließzeiten Nachrichten am Eingangsanschluss einzuliefern, zu erkennen. Derartige Nachrichten können auf Fehler im Netzwerk sowie, insbesondere bei fortgesetztem Auftreten, auf einen Angriff oder auf den unbefugten Austausch eines Geräts hindeuten. Abhängig davon, wie detailliert die Rückmeldung des Detektors sein soll, kann der Detektor mit mehr oder weniger Funktionalität ausgestattet und in Hardware und/oder in Software implementiert sein.

Wenn es beispielsweise nur darum geht, ein fortgesetztes Aufkommen von Nachrichten in den Schließzeiten zu erkennen und darauf zu reagieren, dann kann es beispielsweise ausreichen, zu registrieren, ob am Eingangsanschluss innerhalb der Schließzeiten Licht oder eine elektrische Spannung angelegt wird. Eine Beaufschlagung mit Nachrichten in den Schließzeiten oberhalb einer bestimmten Toleranzschwelle kann dann beispielsweise festgestellt werden, indem durch das Licht, bzw. durch die Spannung, ein Kondensator aufgeladen wird. Wenn der Ladezustand dieses Kondensators einen vorgegebenen Schwellwert überschreitet, kann erkannt werden, dass ein Angriff vorliegt. Bei einer digitalen Verarbeitung kann jede während einer Schließzeit eintreffende Nachricht beispielsweise einen Zähler inkrementieren.

Wenn hingegen detailliertere Informationen erfasst und möglicherweise auch die Quelle der während der Schließzeiten eintreffenden Nachrichten ermittelt werden soll, dann können die Nachrichten, oder zumindest ihre Header, dekodiert werden. Hierfür kann beispielsweise ein Software-Dekoder zum Einsatz kommen. Es kann auch beispielsweise eine Dekodierschaltung aus ASICs oder anderen zur Laufzeit nicht veränderbaren Schaltungen genutzt werden, um einerseits die gewünschten Informationen zu dekodieren und andererseits nicht anfällig gegen eine Korrumpierung des Dekodierprozesses durch Schadsoftware zu sein.

Die Konfigurationseinheit ist zusätzlich dazu ausgebildet, in Antwort auf einen oder mehrere vom Detektor erkannte Versuche einen neuen Zeitplan von der Konfigurationseinheit anzufordern, und/oder einen neuen Zeitplan mit dem mindestens einen Absender von Nachrichten auszuhandeln, und/oder über einen Alarmausgang einen Manipulationsversuch zu melden.

Das Ersetzen des aktuellen Zeitplans durch einen neuen Zeitplan erfüllt den Zweck, das Auffinden des Zeitplans, oder auch einzelner Öffnungszeiten dieses Zeitplans, durch systematisches Ausprobieren zu erschweren. Bevor das Ausprobieren mit hinreichender Wahrscheinlichkeit zum Erfolg führt, ist der gesuchte Zeitplan schon durch einen neuen ersetzt, und das ganze Ausprobieren muss von vorne beginnen.

Die Meldung von Manipulationsversuchen über einen Alarmausgang kann beispielsweise genutzt werden, um Gegenmaßnahmen zu veranlassen, wie etwa die Deaktivierung oder den Neustart von Geräten, oder etwa die Blockierung von Nachrichten aus externen Netzwerken durch eine Firewall.

Nach dem zuvor Beschriebenen ist mindestens der Eingangsanschluss zur Verbindung mit einem Ethernet-Netzwerk ausgebildet. Wie zuvor erläutert, kann dies den Einsatz von Ethernet-Netzwerken als Bordnetzwerke von Fahrzeugen zumindest mittelbar befördern: Durch die erhöhte Sicherheit gegen unbefugt eingeschleuste Nachrichten wird das durch die freie Verfügbarkeit von Wissen und Komponenten für den Zugang zu Ethernet-Netzwerken zunächst bewirkte abstrakte Sicherheitsrisiko deutlich vermindert.

Daher bezieht sich die Erfindung auch auf ein Steuergerät, Navigationssystem oder Unterhaltungssystem für ein Fahrzeug, wobei mindestens ein Exemplar der zuvor beschriebenen Netzwerkschnittstelle zur Verbindung mit einem Bordnetzwerk des Fahrzeugs vorgesehen ist.

In einer weiteren besonders vorteilhaften Ausgestaltung ist ein Sicherheitskreis vorgesehen, der mit dem Alarmausgang der Netzwerkschnittstelle verbindbar ist. Der Sicherheitskreis ist dazu ausgebildet, in Antwort auf die Meldung eines Manipulationsversuchs über den Alarmausgang die Funktionalität eines Steuergeräts, eines Navigationssystems und/oder eines Unterhaltungssystems zu blockieren, eine Wegfahrsperre des Fahrzeugs zu verriegeln, und/oder durch Ansteuerung eines Lenksystems, Antriebssystems und/oder Bremssystems des Fahrzeugs das Fahrzeug aus dem fließenden Verkehr zu entfernen.

So kann beispielsweise ein Navigationssystem oder ein Unterhaltungssystem so ausgeführt sein, dass es nur dann funktioniert, wenn es in bestimmten Abständen Nachrichten von einem Steuergerät des Fahrzeugs erhält. Dabei werden diese Nachrichten von der Netzwerkschnittstelle des Navigationssystems oder Unterhaltungssystems nur dann angenommen, wenn sie während der Öffnungszeiten eines geheimen Zeitplans eintreffen. Treffen diese Nachrichten nicht mehr ein, bzw. treffen nur noch in den Schließzeiten Nachrichten ein, so kann dies als Zeichen dafür gewertet werden, dass das Navigationssystem oder Unterhaltungssystem von seinem ursprünglichen Heimatfahrzeug getrennt und in ein anderes Fahrzeug verpflanzt wurde. Geschieht dies, ohne dass auch der Zeitplan der Netzwerkschnittstelle angepasst wird, so kann dies als Anzeichen dafür gewertet werden, dass das Navigationssystem oder Unterhaltungssystem aus seinem Heimatfahrzeug gestohlen wurde. Das System kann dann, beispielsweise durch eine Sperre in seiner Firmware oder durch Durchbrennen eines für seinen Betrieb benötigten Bauteils, vorerst unbrauchbar gemacht werden und ist in diesem Zustand für einen Dieb wertlos.

Auf ähnliche Weise kann auch die Wegfahrsperre abgesichert werden. So kann beispielsweise eine Einheit, die die physikalische Wirkung der Wegfahrsperre ausübt und etwa die Bremsen blockiert oder die Kraftstoffzufuhr unterbricht, und/oder eine andere zum Inbetriebsetzen des Fahrzeugs benötigte Baugruppe, wie etwa der Anlasser oder eine Pumpe für den Aufbau des Hydraulikdrucks im Automatikgetriebe, über das Bordnetzwerk des Fahrzeugs mit dessen Motorsteuergerät verbunden sein und Befehler nur innerhalb bestimmter Öffnungszeiten akzeptieren. Wenn das Fahrzeug aus dem öffentlichen Verkehrsraum entfernt wird, kann dies beispielsweise über eine Notfalltrajektorie geschehen, wie sie bei zumindest teilweise automatisiert fahrenden Fahrzeugen im ESP-Steuergerät hinterlegt wird.

Nach dem zuvor Beschriebenen bezieht sich die Erfindung auch auf ein Bordnetzwerk für ein Fahrzeug. Dieses Bordnetzwerk umfasst mindestens eine erste Sicherheitsdomäne und eine zweite Sicherheitsdomäne, wobei die zweite Sicherheitsdomäne Teilnehmer umfasst, denen eine höhere Vertrauenswürdigkeit zugewiesen ist als den Teilnehmern der ersten Sicherheitsdomäne, und/oder die zweite Sicherheitsdomäne umfasst Teilnehmer, die für die Sicherheit des Fahrzeugs als Ganzes wichtige Funktionen steuern oder überwachen. Das Bordnetzwerk umfasst mindestens ein Exemplar der beschriebenen Netzwerkschnittstelle, wobei deren Eingangsanschluss mit der ersten Sicherheitsdomäne verbunden ist und wobei der Ausgangsanschluss der Netzwerkschnittstelle mit der zweiten Sicherheitsdomäne verbunden ist.

Auf diese Weise kann das Versenden von Nachrichten aus der ersten Sicherheitsdomäne in die zweite Sicherheitsdomäne auf Teilnehmer beschränkt werden, die den Zeitplan der Netzwerkschnittstelle kennen. Die Kontrolle des Informationsflusses anhand des Zeitplans kann beispielsweise auf den Übergang zwischen den beiden Sicherheitsdomänen fokussiert sein, während innerhalb der jeweiligen Sicherheitsdomänen nicht notwendigerweise Zeitpläne gepflegt und überwacht werden müssen. Auf diese Weise kann beispielsweise vermieden werden, dass es durch das Auseinanderdriften von Uhren verschiedener Netzwerkteilnehmer zu möglicherweise sporadischen Fehlfunktionen durch verworfene Nachrichten kommt.

Eine weitere Möglichkeit für die Unterteilung von Netzwerken in Sicherheitszonen bzw. Sicherheitsgruppen wird durch ein Verfahren zum Betreiben der zuvor beschriebenen Netzwerkschnittstelle, bzw. des zuvor beschriebenen Bordnetzwerks, bereitgestellt. Bei diesem Verfahren verwendet ein und dieselbe Netzwerkschnittstelle für Nachrichten, die von mindestens zwei unterschiedlichen Absendern eingehen, unterschiedliche Zeitpläne. Es kann dann durch Änderung oder Löschung eines dieser Zeitpläne selektiv bestimmten Teilnehmern oder Gruppen von Teilnehmern die Möglichkeit entzogen werden, Nachrichten über die Netzwerkschnittstelle einzuliefern. Auch können beispielsweise die Teilnehmer, die für das Senden an ein und dieselbe Netzwerkschnittstelle den gleichen Zeitplan benutzen, diesen Zeitplan auch für die Kommunikation untereinander benutzen.

Vorteilhaft führt mindestens ein Absender von Nachrichten eine Authentifizierung gegenüber der Konfigurationseinheit, und/oder gegenüber der Kontrolleinheit, durch. Die Entscheidung, welcher Zeitplan als gemeinsames Geheimnis des Absenders und der Netzwerkschnittstelle verwendet wird, hängt vom Erfolg der Authentifizierung ab. So kann beispielsweise festgelegt sein, dass dann, wenn ein Absender authentifiziert und als vertrauenswürdig anerkannt ist, ein zuletzt verwendeter Zeitplan weiter benutzt wird, während für nicht authentifizierte, und/oder für nicht vertrauenswürdige, Kommunikationspartner ein eigener, neuer Zeitplan verwendet wird.

Somit hängt vorteilhaft die Entscheidung, welcher Zeitplan als gemeinsames Geheimnis des Absenders und der Netzwerkschnittstelle verwendet wird, zusätzlich von einem Vertrauenswürdigkeitsstatus des Absenders bei der Konfigurationseinheit, und/oder bei der Kontrolleinheit, ab. Auf diese Weise können insbesondere die Zugriffsrechte von weniger vertrauenswürdigen Kommunikationspartnern maximal eingeschränkt und bei Bedarf selektiv wieder entzogen werden, ohne dass gleichzeitig auch der als vertrauenswürdig anerkannte Datenverkehr blockiert wird. Wenngleich die Öffnungszeiten innerhalb des Zeitplans vorzugsweise kurz sind und beispielsweise für nicht zu großvolumige Übertragungen über 100-Mbit/s-Ethernet weniger als 50 µs betragen können, so kann sich der Zeitplan als Ganzes über Zeiträume von Sekunden bis hin zu Stunden erstrecken. Dabei kann der Zeitplan auch zyklisch wiederholt werden. Vorteilhaft übermittelt die Konfigurationseinheit, und/oder die Kontrolleinheit, dem Absender von Nachrichten den Zeitpunkt, zu dem der Zeitplan zu laufen beginnt. Auf diese Weise kann gewährleistet werden, dass der Absender mit der empfangenden Netzwerkschnittstelle synchron ist, während zugleich der bloße Anfangszeitpunkt des Zeitplans noch kein Geheimnis verrät und daher auch offen über das Netzwerk verschickt werden kann.

Wenngleich viele der beschriebenen Ausführungsformen zusätzliche Sicherheit durch den Einsatz zusätzlicher Hardware bewirken, so kann die Funktionalität der beschriebenen Netzwerkschnittstelle, eine nachgeschaltete Funktionalität eines Steuergeräts, Navigationssystems oder Unterhaltungssystems, die sich das Vorhandensein dieser Netzwerkschnittstelle zu Nutze macht, sowie auch die Funktionalität des beschriebenen Verfahrens ganz oder teilweise in Software implementiert sein. Diese Software kann beispielsweise als Update oder Upgrade vertrieben werden, das mit bereits existierender Hardware zusammenwirkt. Daher bezieht sich die Erfindung auch auf ein Programmelement mit maschinenlesbaren Anweisungen, die,
- wenn sie auf einem Embedded-System einer Netzwerkschnittelle ausgeführt werden, die Netzwerkschnittstelle zu der beschriebenen Netzwerkschnittstelle aufwerten;
- wenn sie auf einem Steuergerät, Navigationssystem oder Unterhaltungssystem ausgeführt werden, das Steuergerät, Navigationssystem oder Unterhaltungssystem zu dem beschriebenen Steuergerät, Navigationssystem oder Unterhaltungssystem aufwerten; und
- wenn sie auf einem oder mehreren Computern, Steuergeräten oder Embedded-Systemen ausgeführt werden, den oder die Computer, Steuergeräte oder Embedded-Systeme dazu veranlassen, das beschriebene Verfahren auszuführen.

Ebenso bezieht sich die Erfindung auch auf einen maschinenlesbaren Datenträger oder ein Downloadprodukt mit dem Programmelement.

Nachfolgend wird der Gegenstand der Erfindung anhand von Figuren erläutert, ohne dass der Gegenstand der Erfindung hierdurch beschränkt wird. Es ist gezeigt:
Figur 1: Ausführungsbeispiel der Netzwerkschnittstelle 1;
Figur 2: Beispielhafte Wirkung des Zeitplans 3;
Figur 3: Beispielhafte Verwendung der Netzwerkschnittstelle 1 in einem Fahrzeug 5 mit einem Netzwerk 50;
Figur 4: Ausführungsbeispiel des Verfahrens 100.

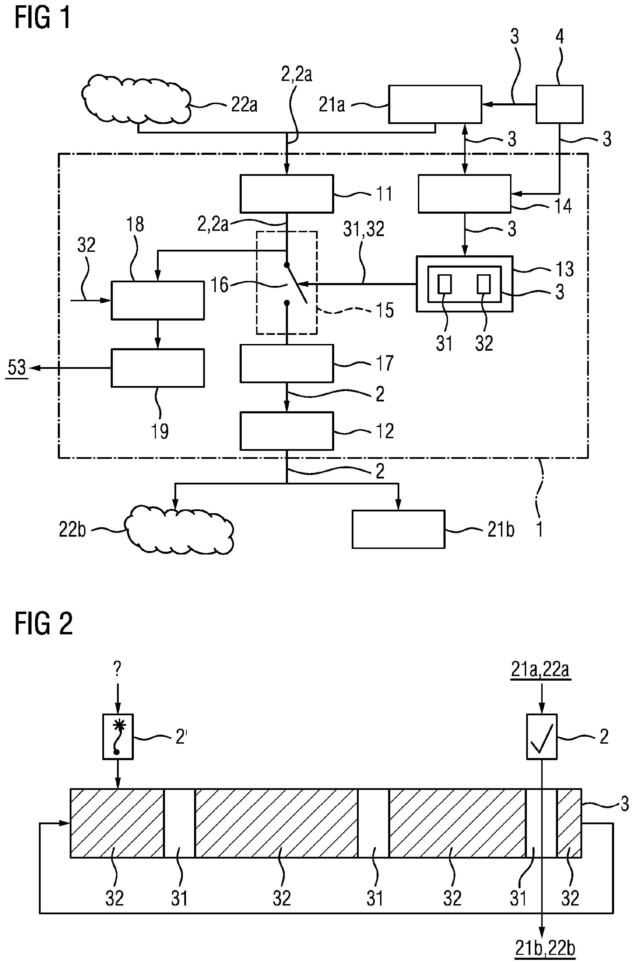

Nach Figur 1 hat die Netzwerkschnittstelle 1 einen Eingangsanschluss 11, über den sie Nachrichten 2 von einem ersten Gerät 21a oder einem ersten Netzwerk 22a entgegennimmt. Die Nachrichten 2 liegen an dem Eingangsanschluss 11 zunächst als elektrische oder optische Signale 2a vor. Die Nachrichten 2 müssen hieraus zunächst mit einem Demodulator 17 dekodiert werden, bevor sie inhaltlich weiter verarbeitet werden können. Von dem Demodulator 17 werden die dekodierten Nachrichten 2 zum Ausgangsanschluss 12 der Netzwerkschnittstelle 1 geleitet. Von dort aus gelangen die Nachrichten 2 zu ihren Empfängern, hier beispielhaft einem zweiten Gerät 21b oder einem zweiten Netzwerk 22b.

In den elektrischen oder optischen Laufweg 15 zwischen dem Eingangsanschluss 11 und den Demodulator 17 ist ein elektrisches oder optisches Schaltelement 16 geschaltet. Dieses Schaltelement 16 wird anhand eines Zeitplans 3, der in einem Speicher 13 der Netzwerkschnittstelle 1 hinterlegt ist, angesteuert. In den Öffnungszeiten 31 des Zeitplans 3 wird das Schaltelement 16 für die Signale 2a durchlässig geschaltet. In den Schließzeiten 32 des Zeitplans 3 wird das Schaltelement 16 für die Signale 2a undurchlässig geschaltet. Somit werden im Endeffekt Nachrichten 2, die während der Öffnungszeiten 31 des Zeitplans 3 eingehen, an ihre Empfänger 21b, 22b weitergeleitet, während Nachrichten 2, die während der Schließzeiten 32 des Zeitplans 3 eingehen, verworfen werden. Die verworfenen Nachrichten 2 gelangen gar nicht erst zum Demodulator 17 und werden somit auch gar nicht erst dekodiert, so dass keine Möglichkeit besteht, mit einer wie auch immer gearteten Malware in einer Nachricht 2 irgendeiner Komponente der Netzwerkschnittstelle 1 den Willen eines Angreifers aufzuzwingen.

Diese Sicherheit beruht darauf, dass der Zeitplan 3 ein gemeinsames Geheimnis der Netzwerkschnittstelle 1 einerseits und den befugten Absendern 21a, 22a andererseits ist. In Figur 1 sind beispielhaft zwei Möglichkeiten eingezeichnet, wie sich der Zustand erreichen lässt, dass sowohl bei dem ersten Gerät 21a als auch bei der Netzwerkschnittstelle 1 das gemeinsame Geheimnis vorliegt. Die Konfigurationseinheit 14 der Netzwerkschnittstelle 1 kann den Zeitplan 3 unmittelbar mit dem ersten Gerät 21a aushandeln, beispielsweise über ein Public-Key-Protokoll. Der Zeitplan kann aber auch beispielsweise durch eine Kontrolleinheit 4 sowohl an das erste Gerät 21a als auch an die Konfigurationseinheit 14 übermittelt werden. Dabei kann die Kontrolleinheit 4, wie in Figur 1 beispielhaft eingezeichnet, außerhalb der Netzwerkschnittstelle 1 angesiedelt sein. Die Kontrolleinheit 4 kann aber auch ebenso gut innerhalb der Netzwerkschnittstelle 1 sitzen.

In der Netzwerkschnittstelle 1 ist weiterhin ein Detektor 18 vorgesehen, der über die Schließzeiten 32 informiert ist und prüft, ob während dieser Zeit Nachrichten 2 am Eingangsanschluss 11 eingehen (d. h., ob dort Signale 2a anliegen). Wenn dies der Fall ist, kann über den Alarmausgang 19 eine versuchte Manipulation gemeldet werden. Diese Meldung kann beispielsweise von einem nachgeschalteten Sicherheitskreis 53 weiter verarbeitet werden und Aktionen auslösen, um die Auswirkungen des Angriffs einzudämmen.

Figur 2 zeigt schematisch, wie sich mit dem Zeitplan 3 Angriffe abgewehrt werden können. Eine bösartige Nachricht 2' von einem durch das Fragezeichen symbolisierten unbekannten Absender, der den Zeitplan 3 nicht kennt, trifft mit hoher Wahrscheinlichkeit während einer Schließzeit 32 ein und wird nicht zum Empfänger 21b, 22b weitergeleitet. Eine gutartige Nachricht 2 von einem autorisierten Absender 21a, 22a trifft hingegen während einer Öffnungszeit 31 ein und erreicht den Empfänger 21b, 22b.

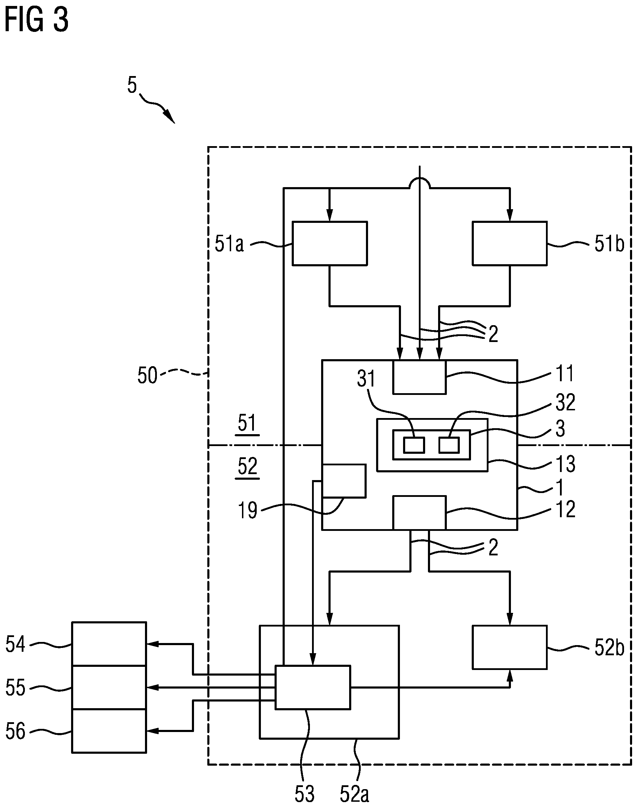

Figur 3 zeigt die beispielhafte Anwendung der Netzwerkschnittstelle 1 in einem Bordnetzwerk 50 eines Fahrzeugs 5. Das Bordnetzwerk 50 ist in diesem Beispiel in zwei Sicherheitsdomänen 51 und 52 unterteilt. In der ersten, weniger vertrauenswürdigen Sicherheitsdomäne 51 sind weniger kritische Systeme, wie hier beispielsweise ein Navigationssystem 51a und ein Unterhaltungssystem 51b, angesiedelt. Diese Systeme sind zugleich vergleichsweise anfällig für Angriffe, weil sie typischerweise Benutzereingaben oder auch digitale Daten (etwa Straßenkarten oder Mediendateien) entgegennehmen. In der zweiten, vertrauenswürdigeren Sicherheitsdomäne 52 sind für die Sicherheit des Fahrzeugs wichtige Systeme, wie hier beispielsweise ein Steuergerät 52a und eine Wegfahrsperre 52b, angesiedelt. Der Datenverkehr von der ersten Sicherheitsdomäne 51 in die zweite Sicherheitsdomäne 52 ist nur über die Netzwerkschnittstelle 1 möglich. Die Netzwerkschnittstelle 1 ist mit ihrem Eingangsanschluss 11 an die erste Sicherheitsdomäne 1 und mit ihrem Ausgangsanschluss 12 an die zweite Sicherheitsdomäne 52 angeschlossen.

Es kann nun beispielsweise vorgesehen sein, dass bestimmte Nachrichten 2 von der ersten Sicherheitsdomäne 51 in die zweite Sicherheitsdomäne 52 weitergeleitet werden. So profitieren beispielsweise Fahrassistenzsysteme davon, wenn sie vom Navigationssystem 51a darüber informiert werden, welche Route der Fahrer des Fahrzeugs 5 geplant hat. Ebenso kann beispielsweise über die Bedienelemente des Unterhaltungssystems 51b eingegeben werden, dass das Automatikgetriebe nur bis zum dritten Gang hochschalten soll, damit im Gefälle die Motorbremse genutzt werden kann. Diese autorisierten Nachrichten 2 treffen während der Öffnungszeiten 31 des im Speicher 13 der Netzwerkschnittstelle 1 hinterlegten Zeitplans 3 ein und werden an ihre jeweiligen Empfänger weitergeleitet.

Wird hingegen das Navigationssystem 51a oder das Unterhaltungssystem 51b mit einer Malware kompromittiert, oder verschafft sich ein Angreifer in sonstiger Weise Zugang zur ersten Sicherheitsdomäne 51, so treffen unautorisiert gesendete Nachrichten (2' in Figur 2) mit hoher Wahrscheinlichkeit während der Schließzeiten 32 ein und werden nicht weitergeleitet. Stattdessen kann das Auftreten solcher Nachrichten 2' über den Alarmausgang 19 der Netzwerkschnittstelle 1 an den Sicherheitskreis 53 des Steuergeräts 52a gemeldet werden. Der Sicherheitskreis 53 kann dann beispielsweise die Funktionalität des Navigationssystems 51a oder des Unterhaltungssystems 51b blockieren, oder etwa die Wegfahrsperre 52a verriegeln. Weiterhin kann der Sicherheitskreis 53 beispielsweise das Fahrzeug 5 durch Ansteuerung des Lenksystems 54, des Antriebssystems 55 und/oder des Bremssystems 56 aus dem fließenden Verkehr entfernen.

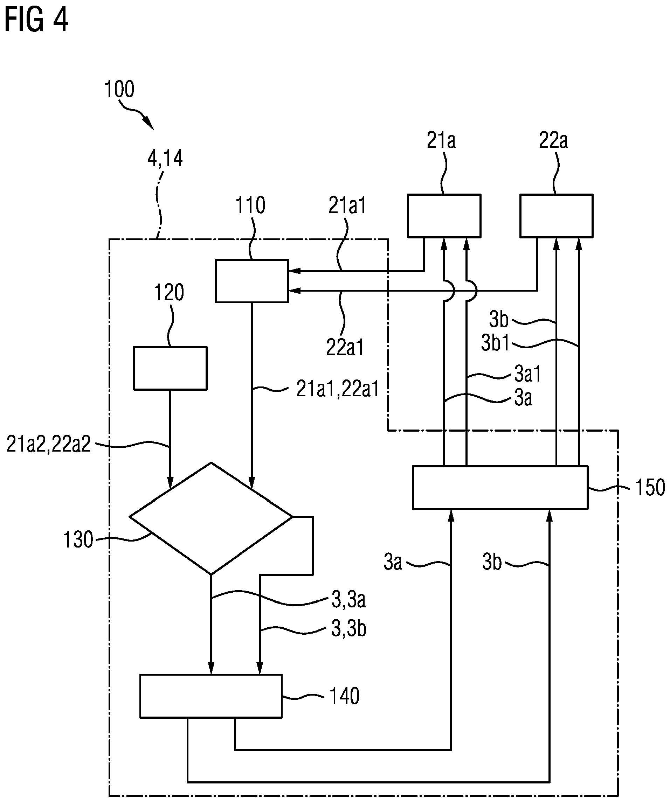

Figur 4 zeigt ein Ausführungsbeispiel des Verfahrens 100. In Schritt 110 führen unterschiedliche Absender 21a, 22a von Nachrichten 2 eine Authentifizierung 21a1 bzw. 22a1 gegenüber der Konfigurationseinheit 14, und/oder gegenüber der Kontrolleinheit 4, durch. In Schritt 120 wird weiterhin der Vertrauenswürdigkeitsstatus 21a2, bzw. 22a2, der Absender 21a und 22a ermittelt. Dieser wird zusammen mit dem Ergebnis der jeweiligen Authentifizierung 21a1, bzw. 22a1, für die Entscheidung 130 darüber herangezogen, welche Zeitpläne 3, 3a, 3b den Absendern 21a und 22a jeweils zugewiesen werden.

Die zugewiesenen Zeitpläne 3, 3a, 3b werden in Schritt 140 an die entsprechenden Absender 21a, 22a übermittelt. In dem in Figur 4 gezeigten Beispiel wird dem ersten Absender 21a der Zeitplan 3a und dem zweiten Absender 22a der Zeitplan 3b zugewiesen. Zusätzlich wird den Absendern 21a und 22a in Schritt 150 noch die jeweilige Anfangszeit 3a1, bzw. 3b1, des jeweiligen Zeitplans 3a bzw. 3b mitgeteilt. Diese Anfangszeit 3a1 bzw. 3b1 ist nicht identisch mit dem Beginn der jeweils ersten Öffnungszeit 31, d.h., beide Zeitpläne 3a, 3b beginnen jeweils mit einer Schließzeit 32.

### Bezugszeichenliste

- 1: Netzwerkschnittstelle
- 11: Eingangsanschluss der Netzwerkschnittstelle 1
- 12: Ausganganschluss der Netzwerkschnittstelle 1
- 13: Speicher der Netzwerkschnittstelle 1
- 14: Konfigurationseinheit der Netzwerkschnittstelle 1
- 15: Laufweg des Signals 2a zum Demodulator 17
- 16: elektrisches oder optisches Schaltelement in Laufweg 15
- 17: Demodulator, extrahiert Nachricht 2 aus Signal 2a
- 18: Detektor für Nachrichten 2 während Schließzeit 32
- 19: Alarmausgang der Netzwerkschnittstelle 1
- 2: Nachricht
- 2': böswillige Nachricht
- 21a: erstes Gerät, erster Absender
- 21a1: Authentifizierung des ersten Absenders 21a
- 21a2: Vertrauenswürdigkeitsstatus des ersten Absenders 21a
- 22a: erstes Netzwerk, zweiter Absender
- 22a1: Authentifizierung des zweiten Absenders 22a
- 22a2: Vertrauenswürdigkeitsstatus des zweiten Absenders 22a
- 21b: zweites Gerät, erster Empfänger
- 22b: zweites Netzwerk, zweiter Empfänger
- 3: Zeitplan
- 3a, 3b: verschiedene Zeitpläne für Absender 21a, 22a
- 3a1: Anfangszeit des Zeitplans 3a
- 3b1: Anfangszeit des Zeitplans 3b
- 31: Öffnungszeit in Zeitplan 3, 3a, 3b
- 32: Schließzeit in Zeitplan 3, 3a, 3b
- 4: Kontrolleinheit
- 5: Fahrzeug
- 50: Bordnetzwerk des Fahrzeugs 5
- 51: erste Sicherheitsdomäne des Bordnetzwerks 50
- 51a: Navigationssystem in erster Sicherheitsdomäne 51
- 51b: Unterhaltungssystem in erster Sicherheitsdomäne 51
- 52a: Steuergerät in zweiter Sicherheitsdomäne 52
- 52b: Wegfahrsperre in zweiter Sicherheitsdomäne 52
- 52: zweite Sicherheitsdomäne des Bordnetzwerks 50
- 53: Sicherheitskreis
- 54: Lenksystem des Fahrzeugs 5
- 55: Antriebssystem des Fahrzeugs 5
- 56: Bremssystem des Fahrzeugs 5
- 100: Verfahren
- 110: Durchführen der Authentifizierung 21a1, 22a1
- 120: Ermitteln des Vertrauensstatus 21a2, 22a2
- 130: Entscheidung über Zeitplan 3, 3a, 3b
- 140: Anwenden des Zeitplans 3a, 3b
- 150: Übermittlung der Anfangszeiten 3a1, 3b1

## Patentansprüche

1. Netzwerkschnittstelle (1) mit einem Eingangsanschluss (11), der dazu ausgebildet ist, Nachrichten (2) von einem ersten Gerät (21a) oder ersten Netzwerk (22a) entgegenzunehmen, und einem Ausgangsanschluss (12), der dazu ausgebildet ist, die Nachrichten (2) an ein zweites Gerät (21b) oder zweites Netzwerk (22b) weiterzuleiten, wobei ein Speicher (13) für einen Zeitplan (3) vorgesehen ist, wobei die Netzwerkschnittstelle (1) dazu ausgebildet ist, während durch den Zeitplan (3) definierter Öffnungszeiten (31) am Eingangsanschluss (11) eingehende Nachrichten (2) an den Ausgangsanschluss (12) weiterzuleiten und während durch den Zeitplan (3) definierter Schließzeiten (32) am Eingangsanschluss (11) eingehende Nachrichten (2) zu verwerfen, wobei zusätzlich eine Konfigurationseinheit (14) vorgesehen ist, die dazu ausgebildet ist, einen von einer Kontrolleinheit (4) als gemeinsames Geheimnis für die Netzwerkschnittstelle (1) und mindestens einen Absender (21a, 22a) von Nachrichten (2) festgelegten Zeitplan (3) entgegenzunehmen und in dem Speicher (13) abzulegen, und/oder einen Zeitplan (3) mit mindestens einem Absender (21a, 22a) von Nachrichten (2) als gemeinsames Geheimnis auszuhandeln,
**dadurch gekennzeichnet, dass**
ein Detektor (18) vorgesehen ist, der dazu ausgebildet ist, Versuche, während der Schließzeiten (32) Nachrichten (2) am Eingangsanschluss (11) einzuliefern, zu erkennen,
wobei die Konfigurationseinheit (14) zusätzlich dazu ausgebildet ist, in Antwort auf einen oder mehrere vom Detektor (18) erkannte Versuche einen neuen Zeitplan (3) von der Konfigurationseinheit (14) anzufordern, und/oder einen neuen Zeitplan (3) mit dem mindestens einen Absender (21a, 22a) von Nachrichten (2) auszuhandeln, und/oder über einen Alarmausgang (19) einen Manipulationsversuch zu melden.

2. Netzwerkschnittstelle (1) nach Anspruch 1, umfassend mindestens ein elektrisches oder optisches Schaltelement (16), das einen elektrischen oder optischen Laufweg (15) von am Eingangsanschluss (11) vorgelegten Signalen (2a) zu den Öffnungszeiten (31) physikalisch durchlässig schaltet und zu den Schließzeiten (32) physikalisch undurchlässig schaltet.

3. Netzwerkschnittstelle (1) nach Anspruch 2, wobei mindestens ein elektrisches oder optisches Schaltelement (16) zwischen den Eingangsanschluss (11) und einen Demodulator (17), der Nachrichten (2) aus den Signalen (2a) dekodiert, geschaltet ist.

4. Netzwerkschnittstelle (1) nach einem der Ansprüche 1 bis 3, wobei die Konfigurationseinheit (14) dazu ausgebildet ist, den Zeitplan (3) mit einem kryptographischen Public-Key-Protokoll auszuhandeln.

5. Netzwerkschnittstelle (1) nach einem der Ansprüche 1 bis 4, wobei die einzelnen Öffnungszeiten (31) in dem Zeitplan (3) höchstens 150 µs lang sind und durch Schließzeiten (32) von mindestens 1 ms Dauer voneinander getrennt sind.

6. Netzwerkschnittstelle (1) nach einem der Ansprüche 1 bis 5, wobei mindestens der Eingangsanschluss (11) zur Verbindung mit einem Ethernet-Netzwerk ausgebildet ist.

7. Steuergerät (52a), Navigationssystem (51a) oder Unterhaltungssystem (51b) für ein Fahrzeug (5), umfassendmindestens eine Netzwerkschnittstelle (1) nach einem der Ansprüche 1 bis 6 zur Verbindung mit einem Bordnetzwerk des Fahrzeugs.

8. Steuergerät (52a), Navigationssystem (51a) oder Unterhaltungssystem (51b) nach Anspruch 7, umfassend einen Sicherheitskreis (53), der mit dem Alarmausgang (19) der Netzwerkschnittstelle (1) verbindbar ist, wobei der Sicherheitskreis (53) dazu ausgebildet ist, in Antwort auf die Meldung eines Manipulationsversuchs über den Alarmausgang (19) die Funktionalität eines Steuergeräts (51a), eines Navigationssystems (51a) und/oder eines Unterhaltungssystems (51b) zu blockieren, eine Wegfahrsperre (52b) des Fahrzeugs (5) zu verriegeln, und/oder durch Ansteuerung eines Lenksystems (54), Antriebssystems (55) und/oder Bremssystems (56) des Fahrzeugs (5) das Fahrzeug (5) aus dem fließenden Verkehr zu entfernen.

9. Bordnetzwerk (50) für ein Fahrzeug (5), umfassend mindestens eine erste Sicherheitsdomäne (51) und eine zweite Sicherheitsdomäne (52), wobei die zweite Sicherheitsdomäne (52) Teilnehmer (52a, 52b) umfasst, denen eine höhere Vertrauenswürdigkeit zugewiesen ist als den Teilnehmern (51a, 51b) der ersten Sicherheitsdomäne (51), und/oder wobei die zweite Sicherheitsdomäne (52) Teilnehmer (52a, 52b) umfasst, die für die Sicherheit des Fahrzeugs (5) als Ganzes wichtige Funktionen steuern oder überwachen, wobei das Bordnetzwerk (50) mindestens eine Netzwerkschnittstelle (1) nach einem der Ansprüche 1 bis 6 umfasst, die über ihren Eingangsanschluss (11) mit der ersten Sicherheitsdomäne (51) und über ihren Ausgangsanschluss (12) mit der zweiten Sicherheitsdomäne (52) verbunden ist.

10. Verfahren (100) zum Betreiben einer Netzwerkschnittstelle (1) nach einem der Ansprüche 1 bis 6 oder eines Bordnetzwerks (50) nach Anspruch 9, wobei ein und dieselbe Netzwerkschnittstelle (1) für Nachrichten (2), die von mindestens zwei unterschiedlichen Absendern (21a, 22a) eingehen, unterschiedliche Zeitpläne (3, 3a, 3b) verwendet (140).

11. Verfahren (100) nach Anspruch 10, wobei mindestens ein Absender (21a, 22a) von Nachrichten (2) eine Authentifizierung (21a1, 22a1) gegenüber der Konfigurationseinheit (14), und/oder gegenüber der Kontrolleinheit (4), durchführt (110) und wobei die Entscheidung (130), welcher Zeitplan (3, 3a, 3b) als gemeinsames Geheimnis des Absenders (21a, 22a) und der Netzwerkschnittstelle (1) verwendet wird (140), vom Erfolg der Authentifizierung (110) abhängt.

12. Verfahren (100) nach Anspruch 11, wobei die Entscheidung (130), welcher Zeitplan (3, 3a, 3b) als gemeinsames Geheimnis des Absenders (21a, 22a) und der Netzwerkschnittstelle (1) verwendet wird (140), zusätzlich von einem Vertrauenswürdigkeitsstatus (21a2, 22a2) des Absenders (21a, 22a) bei der Konfigurationseinheit (14), und/oder bei der Kontrolleinheit (4), abhängt (120) .

13. Verfahren (100) nach einem der Ansprüche 10 bis 12, wobei die Konfigurationseinheit (14), und/oder die Kontrolleinheit (4), dem Absender (21a, 22a) von Nachrichten (2) den Zeitpunkt (3a1, 3b1) übermittelt (150), zu dem der Zeitplan (3, 3a, 3b) zu laufen beginnt.

14. Programmelement, enthaltend maschinenlesbare Anweisungen, die,
• wenn sie auf einem Embedded-System einer Netzwerkschnittelle (1) ausgeführt werden, die Netzwerkschnittstelle (1) zu einer Netzwerkschnittstelle (1) nach einem der Ansprüche 1 bis 8 aufwerten;
• wenn sie auf einem Steuergerät (52a), Navigationssystem (51a) oder Unterhaltungssystem (51b) ausgeführt werden, das Steuergerät (52a), Navigationssystem (51a) oder Unterhaltungssystem (51b) zu einem Steuergerät (52a), Navigationssystem (51a) oder Unterhaltungssystem (51b) nach einem der Ansprüche 9 bis 10 aufwerten; und
• wenn sie auf einem oder mehreren Computern, Steuergeräten oder Embedded-Systemen ausgeführt werden, den oder die Computer, Steuergeräte oder Embedded-Systeme dazu veranlassen, ein Verfahren (100) nach einem der Ansprüche 12 bis 15 auszuführen.

15. Maschinenlesbarer Datenträger oder Downloadprodukt mit dem Programmelement vom Anspruch 14.

## Claims

1. Network interface (1) having an input port (11), which is designed to receive messages (2) from a first device (21a) or first network (22a), and an output port (12), which is designed to forward the messages (2) to a second device (21b) or second network (22b), wherein a memory (13) is provided for a timetable (3), wherein the network interface (1) is designed to forward messages (2) arriving at the input port (11) during open times (31) defined by the timetable (3) to the output port (12) and to discard messages (2) arriving at the input port (11) during closed times (32) defined by the timetable (3), a configuration unit (14) being additionally provided which is designed to receive and to store in the memory (13) a timetable (3), defined by a monitoring unit (4) as a shared secret for the network interface (1) and at least one sender (21a, 22a) of messages (2), and/or to negotiate a timetable (3) with at least one sender (21a, 22a) of messages (2) as a shared secret,
**characterized in that**
a detector (18) is provided, which is designed to detect attempts to deliver messages (2) at the input port (11) during the closed times (32), wherein the configuration unit (14) is additionally designed to request a new timetable (3) from the configuration unit (14) in response to one or more attempts detected by the detector (18), and/or to negotiate a new timetable (3) with the at least one sender (21a, 22a) of messages (2), and/or to signal a manipulation attempt via an alarm output (19).

2. Network interface (1) according to Claim 1, comprising at least one electrical or optical switching element (16), which switches an electrical or optical path (15) of signals (2a) presented at the input port (11) to be physically passable or transparent at the open times (31) and to be physically impassable or opaque at the closed times (32).

3. Network interface (1) according to Claim 2, wherein at least one electrical or optical switching element (16) is connected between the input port (11) and a demodulator (17) which decodes messages (2) from the signals (2a).

4. Network interface (1) according to any one of Claims 1 to 3, wherein the configuration unit (14) is designed to negotiate the timetable (3) with a cryptographic public key protocol.

5. Network interface (1) according to any one of Claims 1 to 4, wherein the individual open times (31) in the timetable (3) are no longer than 150 µs and are separated by closed times (32) of at least 1 ms duration.

6. Network interface (1) according to any one of Claims 1 to 5, wherein at least the input port (11) is designed for connection to an Ethernet network.

7. Control unit (52a), navigation system (51a) or entertainment system (51b) for a vehicle (5), comprising at least one network interface (1) according to any one of Claims 1 to 6 for connection to an on-board network of the vehicle.

8. Control unit (52a), navigation system (51a) or entertainment system (51b) according to Claim 7, comprising a security circuit (53) which is connectable to the alarm output (19) of the network interface (1), wherein the security circuit (53) is designed, in response to the signalling of a manipulation attempt via the alarm output (19), to block the functionality of a control unit (51a), a navigation system (51a) and/or an entertainment system (51b), to lock an immobilizer system (52b) of the vehicle (5), and/or to remove the vehicle (5) from flowing traffic by activating a steering system (54), a drive system (55) and/or a braking system (56) of the vehicle (5).

9. On-board network (50) for a vehicle (5), comprising at least a first security domain (51) and a second security domain (52), wherein the second security domain (52) comprises subscribers (52a, 52b) that are assigned a higher level of trustworthiness than the subscribers (51a, 51b) of the first security domain (51), and/or wherein the second security domain (52) comprises subscribers (52a, 52b) which control or monitor functions important to the security of the vehicle (5) as a whole, the on-board network (50) comprising at least one network interface (1) according to any one of Claims 1 to 6, which is connected to the first security domain (51) via its input port (11) and to the second security domain (52) via its output port (12).

10. Method (100) for operating a network interface (1) according to any one of Claims 1 to 6 or an on-board network (50) according to Claim 9, wherein one and the same network interface (1) uses (140) different timetables (3, 3a, 3b) for messages (2) arriving from at least two different senders (21a, 22a).

11. Method (100) according to Claim 10, wherein at least one sender (21a, 22a) of messages (2) performs (110) an authentication (21a1, 22a1) with respect to the configuration unit (14), and/or with respect to the monitoring unit (4), and wherein the decision (130) as to which timetable (3, 3a, 3b) is used (140) as the shared secret of the sender (21a, 22a) and the network interface (1) depends on the outcome of the authentication (110).

12. Method (100) according to Claim 11, wherein the decision (130) as to which timetable (3, 3a, 3b) is used (140) as the shared secret of the sender (21a, 22a) and the network interface (1) additionally depends (120) on a trustworthiness status (21a2, 22a2) of the sender (21a, 22a) with respect to the configuration unit (14) and/or the monitoring unit (4).

13. Method (100) according to any one of Claims 10 to 12, wherein the configuration unit (14) and/or the monitoring unit (4) transmits (150) to the sender (21a, 22a) of messages (2) the time (3a1, 3b1) at which the timetable (3, 3a, 3b) begins to run.

14. Program element, containing machine-readable instructions which
• when they are executed on an embedded system of a network interface (1), upgrade the network interface (1) to a network interface (1) according to any one of Claims 1 to 8;
• when they are executed on a control unit (52a), navigation system (51a) or entertainment system (51b), upgrade the control unit (52a), navigation system (51a) or entertainment system (51b) to a control unit (52a), navigation system (51a) or entertainment system (51b) according to either of Claims 9 to 10; and
• when they are executed on one or more computers, control units or embedded systems, cause the computer or computers, control units or embedded systems to execute a method (100) according to any one of Claims 12 to 15.

15. Machine-readable data carrier or download product having the program element of Claim 14.

## Revendications

1. Interface de réseau (1) comprenant une borne d'entrée (11), laquelle est configurée pour accepter des messages (2) en provenance d'un premier appareil (21a) ou d'un premier réseau (22a), et une borne de sortie (12), laquelle est configuré pour retransmettre les messages (2) à un deuxième appareil (21b) ou à un deuxième réseau (22b), une mémoire (13) pour un programme temporel (3) étant prévue, l'interface de réseau (1) étant configurée pour retransmettre à la borne de sortie (12) les messages (2) arrivant à la borne d'entrée (11) pendant des temps d'ouverture (31) définis par le programme temporel (3) et rejeter les messages (2) arrivant à la borne d'entrée (11) pendant des temps de fermeture (32) définis par le programme temporel (3), une unité de configuration (14) étant en outre présente, laquelle est configurée pour accepter un programme temporel (3) spécifié par une unité de contrôle (4) en tant que secret commun pour l'interface de réseau (1) et au moins un émetteur (21a, 22a) de messages (2) et le stocker dans la mémoire (13), et/ou pour négocier un programme temporel (3) en tant que secret commun avec au moins un émetteur (21a, 22a) de messages (2), **caractérisée en ce que**
un détecteur (18) est présent, lequel est configuré pour reconnaître des tentatives de livraison de messages (2) à la borne d'entrée (11) pendant les temps de fermeture (32),
l'unité de configuration (14) étant en plus configurée pour, en réponse à une ou plusieurs tentatives reconnues par le détecteur (18), demander un nouveau programme temporel (3) de la part de l'unité de configuration (14) et/ou négocier un nouveau programme temporel (3) avec l'au moins un émetteur (21a, 22a) de messages (2) et/ou signaler une tentative de manipulation par le biais d'une sortie d'alarme (19).

2. Interface de réseau (1) selon la revendication 1, comprenant au moins un élément de commutation (16) électrique ou optique, lequel commute physiquement passant un parcours (15) électrique ou optique des signaux (2a) présentés à la borne d'entrée (11) aux temps d'ouverture (31) et le commute physiquement non passant aux temps de fermeture (32).

3. Interface de réseau (1) selon la revendication 2, au moins un élément de commutation (16) électrique ou optique étant monté entre la borne d'entrée (11) et un démodulateur (17), lequel décode des messages (2) à partir des signaux (2a).

4. Interface de réseau (1) selon l'une des revendications 1 à 3, l'unité de configuration (14) étant configurée pour négocier le programme temporel (3) avec un protocole de clé publique cryptographique.

5. Interface de réseau (1) selon l'une des revendications 1 à 4, les temps d'ouverture (31) individuels dans le programme temporel (3) ayant une durée maximale de 150 µs et étant séparés les uns des autres par des temps de fermeture (32) ayant une durée d'au moins 1 ms.

6. Interface de réseau (1) selon l'une des revendications 1 à 5, au moins la borne d'entrée (11) étant configurée pour une connexion à un réseau Ethernet.

7. Contrôleur (52a), système de navigation (51a) ou système de divertissement (51b) pour un véhicule (5), comprenant au moins une interface de réseau (1) selon l'une des revendications 1 à 6 destinée à la connexion avec un réseau de bord du véhicule.

8. Contrôleur (52a), système de navigation (51a) ou système de divertissement (51b) selon la revendication 7, comprenant un circuit de sécurité (53), lequel peut être connecté à la sortie d'alarme (19) de l'interface de réseau (1), le circuit de sécurité (53) étant configuré pour, par le biais de la sortie d'alarme (19) et en réponse à un signalement d'une tentative de manipulation, bloquer la fonctionnalité d'un contrôleur (51a), d'un système de navigation (51a) et/ou d'un système de divertissement (51b), verrouiller un dispositif d'immobilisation (52b) du véhicule (5) et/ou, en commandant un système de direction (54), un système de propulsion (55) et/ou un système de freinage (56) du véhicule (5), éloigner le véhicule (5) de la circulation fluide.

9. Réseau de bord (50) pour un véhicule (5), comprenant au moins un premier domaine de sécurité (51) et un deuxième domaine de sécurité (52), le deuxième domaine de sécurité (52) comportant des participants (52a, 52b) auxquels est attribuée une fiabilité plus élevée qu'aux participants (51a, 51b) du premier domaine de sécurité (51), et/ou le deuxième domaine de sécurité (52) comportant des participants (52a, 52b) commandent ou surveillent des fonctions importantes pour la sécurité du véhicule (5) dans son ensemble, le réseau de bord (50) comportant au moins une interface de réseau (1) selon l'une des revendications 1 à 6, laquelle est connecté au premier domaine de sécurité (51) par le biais de sa borne d'entrée (11) et au deuxième domaine de sécurité (52) par le biais de sa borne de sortie (12).

10. Procédé (100) pour faire fonctionner une interface de réseau (1) selon l'une des revendications 1 à 6 ou un réseau de bord (50) selon la revendication 9, une seule et même interface de réseau (1) utilisant (140) des programmes temporels (3, 3a, 3b) différents pour les messages (2) qui arrivent en provenance d'au moins deux émetteurs (21a, 22a) différents.

11. Procédé (100) selon la revendication 10, au moins un émetteur (21a, 22a) de messages (2) effectuant (110) une authentification (21a1, 22a1) par rapport à l'unité de configuration (14) et/ou par rapport à l'unité de contrôle (4), et la décision (130) du programme temporel (3, 3a, 3b) qui sera utilisé (140) en tant que secret commun de l'émetteur (21a, 22a) et de l'interface de réseau (1) dépendant de la réussite de l'authentification (110).

12. Procédé (100) selon la revendication 11, la décision (130) du programme temporel (3, 3a, 3b) qui sera utilisé (140) en tant que secret commun de l'émetteur (21a, 22a) et de l'interface de réseau (1) dépendant (120) en plus d'un état de fiabilité (21a2, 22a2) de l'émetteur (21a, 22a) au niveau de l'unité de configuration (14) et/ou au niveau de l'unité de contrôle (4).

13. Procédé (100) selon l'une des revendications 10 à 12, l'unité de configuration (14) et/ou l'unité de contrôle (4) communiquant (150) à l'émetteur (21a, 22a) des messages (2) l'instant (3a1, 3b1) auquel le programme temporel (3, 3a, 3b) commence à se dérouler.

14. Élément de programme, contenant des instructions lisibles par machine qui
* lorsqu'elles sont exécutées sur un système incorporé d'une interface de réseau (1), revalorisent l'interface de réseau (1) en une interface de réseau (1) selon l'une des revendications 1 à 8 ;
* lorsqu'elles sont exécutées sur un contrôleur (52a), un système de navigation (51a) ou un système de divertissement (51b), revalorisent le contrôleur (52a), le système de navigation (51a) ou le système de divertissement (51b) en un contrôleur (52a), un système de navigation (51a) ou un système de divertissement (51b) selon l'une des revendications 9 à 10 ; et
* lorsqu'elles sont exécutées sur un ou plusieurs ordinateurs, contrôleurs ou systèmes incorporés, amènent le ou les ordinateurs, contrôleurs ou systèmes incorporés à mettre en oeuvre un procédé (100) selon l'une des revendications 12 à 15.

15. Support de données lisible par machine ou produit téléchargé comprenant l'élément de programme selon la revendication 14.
